# EUROPÄISCHE PATENTSCHRIFT

(11) **EP 2 303 614 B1**
(45) Veröffentlichungstag und Bekanntmachung des Hinweises auf die Patenterteilung: **12.12.2012**
(21) Anmeldenummer: 09776566.3
(22) Anmeldetag: 27.04.2009
(51) Int. Cl.: B60G 21/055, F15B 11/00

(54) **SCHALTUNGSANORDNUNG SOWIE STABILISIERUNGSEINRICHTUNG UNTER EINSATZ DER SCHALTUNGSANORDNUNG**
CIRCUIT CONFIGURATION AND STABILIZATION DEVICE USING THE CIRCUIT CONFIGURATION
CIRCUITERIE AINSI QUE DISPOSITIF DE STABILISATION LORS DE L'UTILISATION DE LA CIRCUITERIE

(30) Priorität: 29.07.2008 DE 102008035213
(43) Veröffentlichungstag der Anmeldung: 06.04.2011
(73) Patentinhaber: Hydac Electronic GmbH, 66128 Saarbrücken (DE)
(72) Erfinder: DANIEL, Thomas, 66822 Lebach (DE); REMUS, Kai, 66564 Ottweiler (DE); KATTLER, Frank, 66346 Püttlingen (DE)
(74) Vertreter: Bartels, Martin Erich Arthur
(86) Internationale Anmeldenummer: PCT/EP2009/003038
(87) Internationale Veröffentlichungsnummer: WO 2010/012325

(56) Entgegenhaltungen:
- EP-A- 1 609 636
- EP-A- 1 785 293
- DE-A1-102004 040 560
- DE-A1-102005 010 297
- DE-C2- 19 649 187
- US-A1- 2002 162 327

## Beschreibung

Die Erfindung betrifft eine Schaltungsanordnung mit mindestens einem Druckversorgungsanschluss, mindestens einem Niederdruckanschluss und mindestens zwei Nutzanschlüssen, wobei jeder Nutzanschluss für die Zu - und Abfuhr eines Steuerfluids eine Steuerleitung aufweist, wobei die jeweilige Steuerleitung an einer Abzweigstelle in eine eigene Versorgungsleitung mündet, die jeweils mit dem Druckversorgungsanschluss und dem Niederdruckanschluss verbunden ist, und wobei in jeder Versorgungsleitung in Fluidrichtung vor und hinter einer jeden Abzweigstelle mit der Steuerleitung ein Proportional-Druckbegrenzungsventil angeschlossen ist. Die Erfindung betrifft des Weiteren eine Stabilisierungseinrichtung, insbesondere Wank- oder Nickstabilisierungseinrichtung, für Fahrzeuge unter Einsatz einer dahingehenden Schaltungsanordnung.

Eine gattungsgemäße Schaltungsanordnung ist aus EP 1 785 293 A1 bekannt. Die bekannte Schaltungsanordnung ist Teil eines Rollbewegungs-Dämpfungssystems für Kraftfahrzeuge, wobei ein Tank und eine Pumpe für ein Hydraulikfluid mit jeweils einem Fluideinlass und einem Fluidauslass und zwei oder mehr Stabilisierungseinheiten mit jeweils einem Aktuator vorgesehen sind, der zum Steuern des Stabilisierungsmoments in Abhängigkeit vom hydraulischen Druck ausgebildet ist. Die Aktuatoren sind mit ihren jeweiligen Anschlüssen an insgesamt vier Drucksteuermodule angeschlossen. Auf diese Weise sind vier parallele Leitungen von der Pumpe zum Tank ausgebildet. Die vier Drucksteuermodule der bekannten Schaltungsanordnung weisen jeweils zwei Druckbegrenzungsventile in Reihe auf.

Durch die DE 196 49 187 C2 ist eine Schaltungsanordnung für eine hydraulische Stabilisierungseinrichtung für ein zweiachsiges Kraftfahrzeug bekannt mit einem für die Fahrzeug-Vorderachse und einem für die FahrzeugHinterachse vorgesehenen hydraulischen Stellglied sowie mit jeweils einem zwischen einer Druckleitung und einer Tankleitung angeordneten Schaltventil, das derart einstellbar ist, dass die Druckleitung mit einer ersten Arbeitskammer und die Tankleitung mit einer zweiten Arbeitskammer eines jeweiligen hydraulischen Stellgliedes bzw. umgekehrt verbunden ist, sowie mit einem einstellbaren Druckbegrenzungsventil, das in einer Verbindungsleitung zwischen der der Vorderachse zugeordneten Druckleitung und der Tankleitung parallel zum Vorderachs-Schaltventil vorgesehen ist, und mit einem weiteren Druckregelventil, durch welches der in der Druckleitung des Hinterachs-Schaltventils herrschende Druck auf einen Wert eingestellt wird, der nicht höher als derjenige in der Vorderachs-Druckleitung ist.

Diese bekannte Lösung stellt zu jedem Zeitpunkt sicher, dass der Hydraulikdruck am Hinterachs-Stellglied nie größer wird als derjenige am Vorderachs-Stellglied, wobei der Hydraulikdruck am Hinterachs-Stellglied nahezu beliebig einstellbar ist. Die bekannte Lösung mit ihren einzelnen Steuerkreisen bildet für die Schaltungsanordnung eine Art Reihenschaltung aus, und da der Steuerkreis für die Vorderachse immer einen höheren Druck aufweist als der Steuerkreis für die Hinterachse, sind bezogen auf die gewünschte Fahrstabilität bei der bekannten Lösung auch erhöhten Sicherheitsanforderungen Genüge getan.

Neben dieser bekannten Reihenschaltungslösung sind im Stand der Technik frei auf dem Markt erhältliche Schaltungsanordnungen für Stabilisierungseinrichtungen bekannt, bei denen der jeweilige Steuerkreis für die Vorder - und die Hinterachse mit einer eigenen Versorgungseinheit in Form einer zuordenbaren hydraulischen Pumpe versehen ist. Die jeweils für den Vorderachskreis sowie den Hinterachskreis eingesetzte Hydraulikpumpe wird mit der jeweils anderen Hydraulikpumpe als Tandempumpe ausgebildet, d. h. mit nur einem Antriebsmotor (Elektromotor, Verbrennungsmotor etc.) werden gleichzeitig und gleichsinnig beide hydraulischen Pumpen angesteuert. Mit zunehmender Drehzahl der Tandempumpe nimmt auch deren zu fördernder Volumenstrom zu, der entsprechend der geometrischen Fördervolumina in den jeweiligen Steuerkreis von Vorder- und Hinterachse eingespeist wird. Bei einer Drehzahländerung an der hydraulischen Versorgungseinheit kommt es also aufgrund der Tandempumpenanordnung zu einer entsprechenden Änderung des Volumenstroms im vorgebbaren Mengenaufteilungsverhältnis zwischen den beiden Steuerkreisen. Bei der dahingehende Lösung ist mithin sicherzustellen, dass der Steuerkreis mit der Hinterachse immer einen ausreichenden Volumenstrom bekommt, so dass das angesprochene Mengenaufteilungsverhältnis zunächst bei minimaler Pumpenleistung der Tandempumpe festzulegen ist. Ebenso wird bei höheren Pumpenleistungen aufgrund der Drehzahlabhängigkeit der Tandempumpe der überschüssige Volumenstrom prozentual ebenso aufgeteilt und dann in dahingehend vorgegebenem Verhältnis gleichermaßen an den jeweiligen Steuerkreis von Vorder- und Hinterachse weitergegeben. Um ein stabiles System zu erhalten und mithin um ungewollt Schwingungen durch Rückkopplung zu vermeiden, bedarf es einer sehr guten Auslegung des Gesamtsystems unter Einbezug der drehzahlabhängigen Tandempumpe, die im Übrigen teuer in der Anschaffung und im Betrieb ist.

Durch die DE 10 2006 004 264 A1 ist wiederum eine hydraulische Schaltungsanordnung in der Art einer Stabilisierungseinrichtung für ein mehrachsiges Fahrzeug bekannt, mit je einem für eine Vorder- und eine Hinterachse vorgesehenen hydraulischen Steuerkreis, die in der Art einer Parallelschaltung ausgebildet sind, wobei jeweils ein Stellglied für die Ansteuerung der jeweiligen Achse vorgesehen ist. Ferner ist eine hydraulische Versorgungseinheit vorgesehen mit variablem Leistungsvermögen, wobei abhängig vom Leistungsvermögen der angesprochenen Versorgungseinheit zur Ansteuerung der genannten Achsen vorgebbare Mengen eines Volumenstroms zugeteilt werden. Als Regeleinrichtung hierfür dient ein Stromregelventil, das den Volumenstrom zwischen den hydraulischen Verbrauchern für die Achsen aufteilt, wobei bei einem höheren Leistungsvermögen der Versorgungseinheit der damit einhergehende Überschuss an Volumenstrom an eine Achse abgegeben wird, die ungeregelt ist. Mit dieser bekannten Lösung tritt an die Stelle der sonst vorgeschlagenen Mengenaufteilung mit vorgebbaren prozentualen Volumenverhältnissen eine definierte Regelung und im Überschussfall an Volumenstrom bleibt dieser an der mittels des Stromregelventils geregelten Achse konstant, und der Überschussanteil gelangt an die jeweilige ungeregelte Achse, wodurch u. a. erreicht werden kann, dass die gewünschte Wankstabilisierung an der nicht geregelten Achse vom Ansteuerverhalten her höher dynamisch ausgelegt ist.

Die insoweit bei den bekannten Anwendungen zum Einsatz kommenden Stromteilervorrichtungen als Schaltungsanordnung stellen in der Regel ein Ventil dar, das den zulaufenden Volumenstrom nach dem Drosselprinzip in zwei vorausbestimmte Teilströme teilt. Da der Steuerkolben der Stromteilervorrichtung in der Art einer Druckwaage wirkt, gilt, dass auch weitgehend für unterschiedliche Drücke in den Teilströmen das vorgebbare Volumenstromverhältnis beibehalten wird. Sofern solche Stromteilervorrichtungen für den genannten Anwendungsbereich zum Einsatz kommen wie Wank- und Nickstabilisierung von Fahrzeugachsen oder bei vergleichbarer Aufgabenstellung für Federungssysteme wie Kabinenfederungen, sind an die Funktionssicherheit dahingehender Stromteilervorrichtungen erhöhte Anforderungen zu stellen. Dies gilt insbesondere für einen Versagensfall, bei dem ein hydraulischer Versorgungskreis eines der vorgesehenen Nutzanschlüsse der Stromteilervorrichtung blockiert ist, was auch der Fall sein kann, wenn ein nachgeschaltetes Ventil im hydraulischen Steuerkreis, beispielsweise aufgrund eines elektrischen Versagens in einer den jeweiligen Fluidkreis sperrenden Blockierstellung verbleibt. Grundsätzlich gilt, dass Stromteiler und Stromregler zwei unterschiedliche Systeme darstellen. So teilt ein Stromteiler in einem vorgegebenen Verhältnis den Fluidstrom auf, wohingegen ein Stromregler den einen Fluidstrom regelt und den zweiten Fluidstrom variiert.

Auch hat es sich in der Praxis gezeigt, dass die Synchronisierung beim Aufteilen der Fluidvolumenströme zu zeitlichen Verzögerungen führt, die einem harmonischen Steuer- oder Regelverhalten entgegenstehen. Auch sind die bekannten Stromteilervorrichtungen teilweise teuer in der Anschaffung und lassen, was die Funktionssicherheit anbelangt, noch Wünsche offen. Dies vorausgeschickt stellt sich die Erfindung die Aufgabe, die bekannten Lösungen dahingehend weiter zu verbessern; dass in funktionssicherer und kostengünstiger Weise Schaltungsanordnungen und Stabilisierungseinrichtungen unter Einsatz der dahingehenden Schaltungsanordnung geschaffen sind, die funktionssicher im Gebrauch, kostengünstig herstellbar sind und darüber hinaus auch erhöhten Anforderungen an einen synchronisierten Betrieb für den Erhalt eines harmonischen Ansprechverhaltens Genüge tun. Eine dahingehende Aufgabe löst eine Schaltungsanordnung mit den Merkmalen des Patentanspruches 1 in seiner Gesamtheit sowie eine Stabilisierungseinrichtung unter Einsatz einer dahingehenden Schaltungsanordnung gemäß der Merkmalsausgestaltung des Anspruchs 8.

Eine erfindungsgemäße Schaltungsanordnung ist gemäß dem kennzeichnenden Teil von Patentanspruch 1 dadurch gekennzeichnet, dass zur Versorgung der beiden Nutzanschlüsse insgesamt sechs Proportional-Druckbegrenzungsventile eingesetzt sind. Vorteilhafte Ausgestaltungen der erfindungsgemäßen Schaltungsanordnung sind Gegenstände der Unteransprüche.

Dadurch, dass die jeweilige Steuerleitung an einer Abzweigstelle in eine eigene Versorgungsleitung mündet, die jeweils mit dem Druckversorgungsanschluss und dem Niederdruckanschluss verbunden ist und dass in jeder Versorgungsleitung in Fluidrichtung vor und hinter einer jeden Abzweigstelle mit der Steuerleitung ein Proportional-Druckbegrenzungsventil angeschlossen ist, ist im Betrieb der Schaltungsanordnung im jeweiligen durch die zuordenbare Steuerleitung gebildeten Steuerkreis eine separate Androsselung der in Reihe hintereinander angeordneten Druckbegrenzungsventile möglich, so dass insoweit ein synchronisiertes Ansprechverhalten erreicht ist, was sich wiederum in einem harmonischen Ansteuer- oder Regelverhalten für die Gesamtanordnung niederschlägt. Etwaig auftretende Druckspitzen werden über den Druckmeldekolben im Proportional-Druckbegrenzungsventil ausgeregelt.

Die eingesetzten Proportional-Druckbegrenzungsventile sind Standardbauteile und lassen sich kostengünstig für die Schaltungsanordnung verwenden. Insbesondere wenn die Proportional-Druckbegrenzungsventile als Gleichbauteile ausgebildet sind, ist eine kostengünstige Herstellung der Schaltungsanordnung ohne Weiteres erreichbar. Zur Versorgung von zwei Nutzanschlüssen ist es dabei erfindungsgemäß ausreichend, insgesamt sechs gleiche Proportional-Druckbegrenzungsventile zu verwenden. Proportional-Druckbegrenzungsventile zeichnen sich u. a. dadurch aus, dass der Ansprechdruck des Ventils durch einen proportionalen elektrischen Strom vorgegeben ist, der insoweit einen Proportionalmagneten ansteuert, der auf ein Stellglied oder einen Ventilschieber des Ventils einwirkt und insoweit in Abhängigkeit des Ansteuerstroms in proportionaler Weise den Druck vorgibt.

Die erfindungsgemäße Schaltungsanordnung lässt sich im Sinne des nebengeordneten Patentanspruches 8 bevorzugt für hydraulische Stabilisierungseinrichtungen einsetzen wie Wank- und Nickstabilisierungseinrichtungen betreffend Kraftfahrzeugachsen, aber auch für Federungssysteme, wie sie bei Bedienerkabinen von Arbeitsmaschinen, Lastkraftwagen etc. Verwendung finden. Die erfindungsgemäße Schaltungsanordnung ist jedoch auf dahingehende Anwendungen nicht eingeschränkt und kann immer dort eingesetzt werden, wo für hydraulische Verbraucher proportional ein Fluiddruck zur Verfügung zu stellen ist.

Im Folgenden wird die erfindungsgemäße Schaltungsanordnung anhand eines Ausführungsbeispieles betreffend eine Stabilisierungseinrichtung näher erläutert. Dabei zeigt die einzige
- Figur: in prinzipieller und nicht maßstäblicher Darstellung sowie in der Art eines hydraulischen Schaltplans eine Stabilisierungseinrichtung unter Einsatz einer Schaltungsanordnung nach der Erfindung.

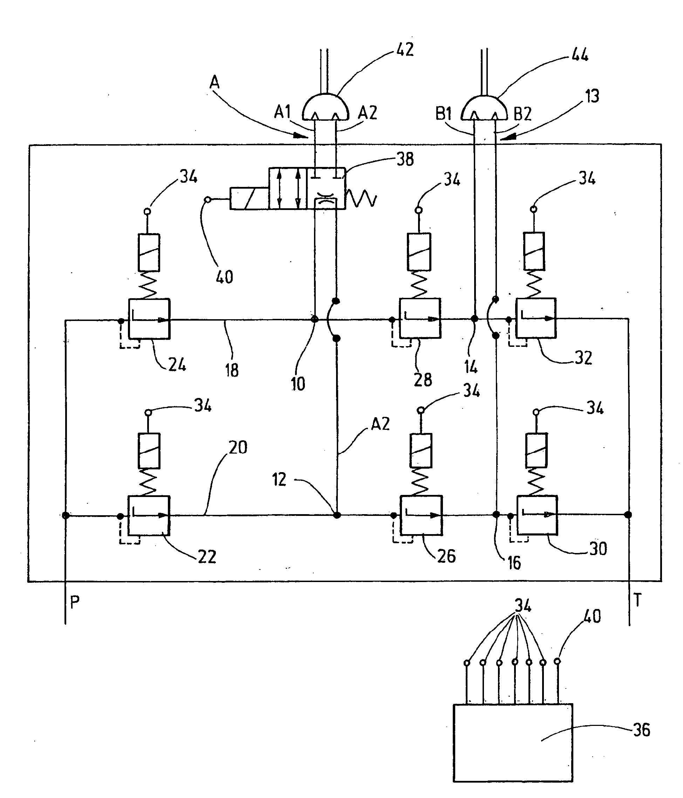

Die in der Figur dargestellte Schaltungsanordnung weist einen Druckversorgungsanschl uss P auf. Dieser ist an eine nicht näher dargestellte Hydropumpe angeschlossen, die drehzahlabhängig von einem Motor beispielsweise einem Kraftfahrzeug-Dieselmotor oder Teilen desselben angetrieben wird, so dass die hydraulische Versorgung auf der Pumpenausgangsseite in Abhängigkeit der Drehzahl des Motors über ein variables Leistungsvermögen verfügt. Anstelle der genannten Hydropumpe kann aber auch eine sonstige Druckversorgung zur Versorgung mit einem Fluidmedium an den Druckversorgungsanschluss P angeschlossen sein. Ferner weist die Schaltungsanordnung einen Niederdruckanschluss T auf, der beispielsweise aus einer üblichen Tankleitung bestehen kann, die zu einem hydraulischen Versorgungstank (nicht dargestellt) führt. Des Weiteren weist die Schaltungsanordnung zwei Nutzanschlüsse, die als Ganzes mit A, B bezeichnet sind, auf. Jeder der beiden genannten Nutzanschiüsse A, B weist für die Zu - und Abfuhr eines Steuer- oder Versorgungsfluids regelmäßig in Form von Hydrauliköl eine Steuerleitung A1, A2; B1, B2 auf.

Die jeweilige Steuerleitung A1, A2; B1, B2 mündet an einer Abzweigstelle 10, 12, 14, 16 in eine eigene Versorgungsleitung 18, 20. Insbesondere mündet die Steuerleitung A1 über die erste Abzweigstelle 10 in die Versorgungsleitung 18 und die Steuerleitung B1 entsprechend über die dritte Abzweigstelle 14 in die genannte Versorgungsleitung 18. Die Steuerleitung A2 wiederum mündet über die zweite Abzweigstelle 12 in die weitere Versorgungsleitung 20, ebenso wie der Steueranschluss B2 über die vierte Abzweigstelle 16 in die zweite Versorgungsleitung 20 mündet. Wie die Figur weiter zeigt, münden beide Versorgungsleitungen 18, 20 auf ihrer Eingangsseite in den Druckversorgungsanschluss P und auf ihrer Ausgangsseite in den Niederdruckanschluss T. Ferner ist in jeder der Versorgungsleitungen 18, 20 in Fluidrichtung vor und hinter einer jeden Abzweigstelle 10, 12, 14, 16 ein Proportional-Druckbegrenzungsventil 22, 24, 26, 28, 30 und 32 angeschlossen. Zur Ansteuerung der jeweils genannten Ventile dient in üblicher und daher nicht mehr näher beschriebener Art und Weise ein Proportionalmagnet, der eingangsseitig jeweils über eine Anschlussleitung 34 an eine als Blackbox dargestellte Steuereinrichtung 36 angeschlossen ist.

Zwischen dem Nutzanschluss A und der jeweiligen Versorgungsleitung 18, 20 ist ein Steuerventil 38 insbesondere in Form eines 4/2-Wegeventiles geschaltet, das in seiner in der Figur gezeigten Sperrstellung den Nutzanschluss A von den Versorgungsleitungen 18, 20 trennt und im Übrigen eine fluidführende Verbindung zwischen den Steuerleitungen A1, A2 auf der Versorgungsseite der Schaltungsanordnung herstellt. Das Steuerventil 38 lässt sich über einen Schaltmagneten ansteuern, der hierfür auf seiner Eingangsseite mit einer weiteren Anschlussleitung 40 versehen ist, die wiederum von der Steuereinrichtung 36 angesteuert werden kann. In der fluidführenden Stellung des Ventiles 38 stellt dieses für beide Steuerleitungen A1, A2 eine dahingehende Verbindung zu den Versorgungsleitungen 18 und 20 her.

An dem jeweiligen Nutzanschluss A, B ist ein hydraulischer Verbraucher angeschlossen in der Art eines hydraulischen Stelltriebes 42, 44, gebildet aus einem üblichen hydraulischen Schwenkmotor, der für die Wankstabilisierung einer nicht näher dargestellten Fahrzeugachse dienen soll, wobei im vorliegenden Ausführungsbeispiel der Stelltrieb 42 der Vorderachse zugeordnet sein soll und der Stelltrieb 44 der Hinterachse. Anstelle der hydraulischen Stellmotoren kann für die Stelltriebe 42, 44 auch ein hydraulischer Gleichgangzylinder oder dergleichen eingesetzt sein. Der jeweilige Stelltrieb 42, 44 braucht nicht eingeschränkt zu sein auf die Verwendung als Wank- oder Nickstabilisierungseinrichtung für Fahrzeugachsen, sondern die aufgezeigten Stelltriebe 42, 44 können auch der Ansteuerung von Fahrzeug - oder Kabinenfederungen dienen. Wie die Schaltungsanordnungen nach der Figur deutlich machen, sind die einzelnen Proportional-Druckbegrenzungsventile 22, 24, 26, 28, 30, 32 als Gleichbauteile ausgebildet, und ebenso können die Stelltriebe 42, 44 als Gleichbauteil realisiert sein. Insgesamt kommt die aufgezeigte Schaltungsanordnung mit sechs Proportional-Druckbegrenzungsventilen (PDB) aus, und die Versorgungsleitungen 18, 20 sind in der Art einer Parallelschaltung an den Druckversorgungsanschluss P sowie an den Niederdruckanschluss T angeschlossen. Die derart standardisierte Schaltungsanordnung ist ausgesprochen funktionssicher im Betrieb und lässt sich kostengünstig realisieren.

Des besseren Verständnisses wegen wird im Folgenden die Schaltungsanordnung anhand eines Ansteuervorganges mittels der Steuereinrichtung 36 näher erläutert. Sofern für einen Betrieb der Stabilisierungseinrichtung die Stelltriebe 42, 44 über ihre Steuerleitungen A1, B1 anzusteuern sind, schließt die Steuereinrichtung 36 zunächst das Ventil 22 und öffnet das Ventil 24. Das Schaltventil 38 ist dabei in der fluidführenden Stellung. Ferner wird das Ventil 28 etwas angedrosselt, was insoweit zu einem Druckanstieg in der Steuerleitung A1 für den Stelltrieb 42 führt. Der verbleibende Restvolumenstrom wird über das Ventil 28 dazu genutzt, um das Ventil 32 entsprechend zu versorgen, das wiederum derart angedrosselt wird, dass der Druck in der Steuerleitung B1 für die Versorgung des Steuertriebes 44 ansteigt. Der noch verbleibende Restvolumenstrom wird dann über das Ventil 32 auf die Niederdruckanschlussseite T in den nicht näher dargestellten Tank verbracht.

Die gegenläufig wirkenden Steuerleitungen A2, B2 der Stelltriebe 42 bzw. 44 sind dabei drucklos gehalten, indem die weiteren Ventile 26, 30 seitens der Steuereinrichtung 36 in ihre geöffnete Stellung verbracht sind. Auf diese Art und Weise lässt sich für eine aktive Wank- oder Nickstabilisierung ein höherer Volumenstrom mit einem vorgebbaren Druckniveau an den Stelltrieb 42 leiten und ein geringerer Restvolumenstrom mit vorgegebenem Druckniveau dient der Ansteuerung des weitere Stelltriebes 44. Vorzugsweise ist dabei der Stelltrieb 42 für die Ansteuerung der Vorderachse vorgesehen, wohingegen der Stelltrieb 44 mit dem niedrigeren Volumenstrom der Versorgung der Hinterachse des angesprochenen Fahrzeuges dient. Da regelmäßig die Vorderachse für die Lenkung des Fahrzeuges eingesetzt wird, ist insoweit der höhere Volumenstromanteil der Vorderachse zugeordnet.

Sollen zum gegenläufigen Ansteuern der Stelltriebe 42, 44 diese von den Steuerleitungen A2, B2 entsprechend mit Fluiddruck beaufschlagt werden, wird das Ventil 24 geschlossen und das Ventil 22 ist geöffnet. Mittels der Steuereinrichtung 36 wird dann das Ventil 26 angedrosselt, so dass bei betätigtem Schaltventil 38 der Druck in der Steuerleitung A2 ansteigt. Der verbleibende Restvolumenstrom, der über das Ventil 26 fließt, wird dann wiederum dazu genutzt, das Ventil 30 zu versorgen, das entsprechend angedrosselt den Druck in der Steuerleitung B2 anwachsen lässt. Der noch verbleibende Restvolumenstrom wird dann wiederum auf die Niederdruck-anschlussseite T geführt, und die Steuerleitungen A1, A2 liegen auf dem Niederdruckniveau durch Öffnung der Ventile 28 bzw. 32.

Im Störungsfall kann das Schaltventil 38 geschlossen werden, so dass eine Art Fail-Safe-Betrieb erreicht ist. Ansonsten erweisen sich die als Standardventile ausgebildeten Druckbegrenzungsventile 22, 24, 26, 28, 30, 32 als sehr robust und mithin funktionssicher beim Betrieb der aufgezeigten Stabilisierungseinrichtung.

## Patentansprüche

1. Schaltungsanordnung
- mit mindestens einem Druckversorgungsanschluss (P), mindestens einem Niederdruckanschluss (T) und mindestens zwei Nutzanschlüssen (A, B),
- wobei jeder Nutzanschluss (A, B) für die Zu- und Abfuhr eines Steuerfluids eine Steuerleitung (A1, A2; B1, B2) aufweist,
- wobei die jeweilige Steuerleitung an einer Abzweigstelle (10, 12, 14, 16) in eine eigene Versorgungsleitung (18, 20) mündet, die jeweils mit dem Druckversorgungsanschluss (P) und dem Niederdruckanschluss (T) verbunden ist, und
- wobei in jeder Versorgungsleitung (18, 20) in Fluidrichtung vor und hinter einer jeden Abzweigstelle mit der Steuerleitung ein Proportional-Druckbegrenzungsventil (22, 24, 26, 28, 30, 32) angeschlossen ist,
- **dadurch gekennzeichnet, dass** zur Versorgung der beiden Nutzanschlüsse (A, B) insgesamt sechs Proportional-Druckbegrenzungsventile (22, 24, 26, 28, 30, 32) eingesetzt sind.

2. Schaltungsanordnung nach Anspruch 1, **dadurch gekennzeichnet, dass** die Proportional-Druckbegrenzungsventile (22, 24, 26, 28, 30, 32) als Gleichbauteile ausgebildet sind.

3. Schaltungsanordnung nach Anspruch 1 oder 2, **dadurch gekennzeichnet, dass** die Versorgungsleitungen (18, 20) in der Art einer Parallelschaltung angeordnet sind.

4. Schaltungsanordnung nach einem der Ansprüche 1 bis 3, **dadurch gekennzeichnet, dass** zumindest zwischen einem Nutzanschluss (A) und dem daran angeschlossenen Verbraucher ein Schaltventil (38), insbesondere ein 4/2-Wege-Ventil geschaltet ist.

5. Schaltungsanordnung nach einem der Ansprüche 1 bis 4, **dadurch gekennzeichnet, dass** in Fluidrichtung zur Versorgung der einzelnen Nutzanschlüsse (A, B) die Proportional-Druckbegrenzungsventile in einer der Versorgungsleitungen (18, 20) zusehends mittels einer Steuereinrichtung (36) angesteuert sind.

6. Schaltungsanordnung nach einem der Ansprüche 1 bis 5, **dadurch gekennzeichnet, dass** der an dem jeweiligen Nutzanschluss (A, B) angeschlossene Verbraucher aus einem hydraulischen Stelltrieb (42, 44) gebildet ist.

7. Schaltungsanordnung nach Anspruch 6, **dadurch gekennzeichnet, dass** der Stelltrieb (42, 44) ein Schwenkmotor oder ein Zylinder, insbesondere Differentialzylinder ist.

8. Stabilisierungseinrichtung, insbesondere Wank- oder Nickstabilisierungseinrichtung für Fahrzeuge unter Einsatz einer Schaltungsanordnung gemäß der Merkmalsausgestaltung nach einem der Patentansprüche 1 bis 7.

## Claims

1. A circuit configuration
- having at least one pressure supply connection (P), at least one low pressure connection (T) and at least two utility connections (A,B),
- each utility connection (A, B) having a control line (A1, A2; B1, B2) for the delivery and discharge of a control fluid,
- the respective control line opening at a branching point (10, 12, 14, 16) into a dedicated supply line (18, 20) which is respectively connected to the pressure supply connection (P) and the low pressure connection (T), and
- a proportional pressure limiting valve (22, 24, 26, 28, 30, 32) being connected to the control line in each supply line (18, 20) ahead of and behind each branch point in the fluid direction,
- **characterised in that** a total of six proportional pressure limiting valves (22, 24, 26, 28, 30, 32) are used in order to supply the two utility connections (A, B).

2. The circuit configuration according to Claim 1, **characterised in that** the proportional pressure limiting valves (22, 24, 26, 28, 30, 32) are designed as identical components.

3. The circuit configuration according to Claim 1 or 2, **characterised in that** the supply lines (18, 20) are arranged in the manner of a parallel circuit.

4. The circuit configuration according to any of Claims 1 to 3, **characterised in that** a switchover valve (38), in particular a 4/2 way valve, is connected at least between a utility connection (A) and the consumer connected to the latter.

5. The circuit configuration according to any of Claims 1 to 4, **characterised in that** the proportional pressure limiting valves in one of the supply lines (18, 20) are increasingly actuated in the fluid direction by means of a control device (36) to supply the individual utility connections (A, B).

6. The circuit configuration according to any of Claims 1 to 5, **characterised in that** the consumer connected at the respective utility connection (A, B) is formed from a hydraulic actuating drive (42, 44).

7. The circuit configuration according to Claim 6, **characterised in that** the actuating drive (42, 44) is an oscillating motor or a cylinder, in particular a differential cylinder.

8. A stabilisation device, in particular an anti-roll or pitch stabilisation device for vehicles using a circuit configuration according to the feature configuration according to any of Claims 1 to 7.

## Revendications

1. Circuiterie
- comprenant au moins un raccord (P) d'alimentation en pression, au moins un raccord (T) de basse pression et au moins deux raccords (A, B) utiles,
- dans laquelle chaque raccord (A, B) utile a un conduit (A1, A2 ; B1, B2) de commande pour l'admission et pour l'évacuation d'un fluide de commande,
- dans laquelle le conduit de commande respectif débouche en un point (10, 12, 14, 16) de dérivation dans un conduit (18, 20) propre d'alimentation, qui communique respectivement avec le raccord (P) d'alimentation en pression et avec le raccord (T) de basse pression, et
- dans laquelle, dans chaque conduit (18, 20) d'alimentation, une vanne (22, 24, 26, 28, 30, 32) de limitation de la pression proportionnelle est raccordée au conduit de commande, dans le sens du fluide, avant et après chaque point de dérivation,
- **caractérisée en ce qu'**en tout six vannes (22, 24, 26, 28, 30, 32) de limitation de la pression proportionnelles sont utilisées pour l'alimentation des deux raccords (A, B).

2. Circuiterie suivant la revendication 1, **caractérisée en ce que** les vannes (22, 24, 26, 28, 30, 32) de limitation de la pression proportionnelles sont constituées sous la forme d'éléments identiques.

3. Circuiterie suivant la revendication 1 ou 2, **caractérisée en ce que** les conduits (18, 20) d'alimentation sont disposés à la manière d'un circuit en parallèle.

4. Circuiterie suivant l'une des revendications 1 à 3, **caractérisée en ce qu'**une vanne (33) pilote, notamment un distributeur 4/2 voies, est montée entre un raccord (A) utile et l'utilisateur qui y est raccordé.

5. Circuiterie suivant l'une des revendications 1 à 4, **caractérisée en ce que**, dans le sens du fluide pour l'alimentation des divers raccords (A, B) utiles, les vannes de limitation de la pression proportionnelles sont commandées, vu dans l'un des conduits (18, 20) d'alimentation, au moyen d'un dispositif (36) de commande.

6. Circuiterie suivant l'une des revendications 1 à 5, **caractérisée en ce que** l'utilisateur raccordé aux raccords (A, B) utiles respectifs est formé d'un actionneur (42, 44) hydraulique.

7. Circuiterie suivant la revendication 6, **caractérisée en ce que** l'actionneur (42, 44) est un moteur oscillant ou un vérin, notamment un vérin différentiel.

8. Dispositif de stabilisation, notamment dispositif de stabilisation au roulis ou au tangage de véhicules, en utilisant une circuiterie suivant la conformation de caractéristiques selon l'une des revendications 1 à 7.
